# EUROPEAN PATENT SPECIFICATION

(11) **EP 1 908 650 B1**
(45) Date of publication and mention of the grant of the patent: **24.11.2010**
(21) Application number: 07380098.9
(22) Date of filing: 11.04.2007
(51) Int. Cl.: B60R 21/34, B60R 19/18

(54) **Deformable part for the front part of a vehicle**
Verformbares Teil für die Frontpartie eines Fahrzeugs
Partie déformable pour l'avant d'un véhicule

(30) Priority: 03.10.2006 ES 200602159 U
(43) Date of publication of application: 09.04.2008
(73) Proprietor: Seat, S.A., 08760 Martorell - Barcelona (ES)
(72) Inventor: Lluch Suriol, Xavier, 08760 Martorell, Barcelona (ES)
(74) Representative: Carvajal y Urquijo, Isabel

(56) References cited:
- EP-A- 1 199 224
- DE-A1-102005 020 730

## Description

### Field of the Invention

The present invention relates to a deformable part for reducing the effect of frontal impacts in vehicles, and more specifically for being used as a means of protecting pedestrians in the event of being hit.

The part of the invention is designed as a means which allows absorbing part of the energy released due to the effect of the frontal impact of a vehicle against a pedestrian, for which purpose said part deforms upon receiving the impact caused by hitting the pedestrian.

### Background of the Invention

Due to the requirements for protecting pedestrians, it is necessary to provide vehicles with a frontal non-aggressive deformation area between the outer elements of the vehicle and the stiff inner parts.

An empty space is currently left between the outer elements of the vehicle and the stiff inner parts for deformation, or, in the event of there being insufficient space, foam is added between the stiff inner areas of the vehicle and the outer elements.

Current design trends of vehicle exteriors are limited due to the need to reserve a certain sized space for the deformation of the sheet in the event of impact. This involves a more complex problem and increases the cost of placing the mechanical and electric elements in the frontal area of the vehicle.

The foams used as an alternative solution have limitations relating to compressibility, which is about 80%, and in relation to the gradual hardening in the compression process. This means that not all the available space is used because on one hand 20% of the distance is unused due to the incompressibility of the foam, and on the other hand energy absorption capacity is lost.

EP 1 199 224, which corresponds to the preamble of claim 1, discloses a bumper assembly having a hook angled towards end of door column and provided to engage an opening in an inner shell metal of a vehicle door. The bumper assembly has hat-shaped cross-section. The hook is arranged at the end face of end sections of hat-shaped profiled section. The end sections are tapered towards the hook.

### Description of the Invention

The object of the present invention is to eliminate the drawbacks described above, allowing to reduce the size of the space reserved for the deformation area in the event that its dimensions represent a problem for the design of the automobile.

To that end, according to the invention a deformable metal part, having the features claim 1, is provided configured so that it absorbs most of the initial energy, saving space in the deformation area.

The deformable metal part discussed obtains absorbing a larger amount of initial energy, therefore the deceleration of the impact increases sooner. Displacement is thus decreased, allowing reserving a smaller space.

The part of the invention can be placed in the upper, middle or lower part of the frontal area, or in all of them, in order to obtain a greater protective effect.

The deformable part object of the present invention is formed by a sheet metal profile which can be obtained from sheet metal having a rectangular contour and in which a profile is obtained by means of longitudinal shapings having in a sectional view a curved central section, which is limited between first converging straight sections that are identical and symmetric to one another, followed by second diverging straight sections, also identical and symmetric to one another. In this profile, the edges separating the curved central area of the areas corresponding to the first straight sections are crossed by openings partially extending on both areas in the transverse direction.

The deformable part of the invention is thus configured by a grooved profile, the longitudinal opening of which partially narrows and ends in the diverging end sections. The openings crossing the edges separating the curved central sections of the straight adjacent sections weaken the corresponding areas acting by way of hinges for facilitating the deformation of the curved central area in the event of impact in order to obtain the aforementioned energy absorption.

According to another feature of the invention, in relation to the section of the profile, the length of the curved section is equal to the sum of the length of the first straight sections plus the distance separating the angles or bends formed between the first and second straight sections. The dimensions of the metal part are thus determined so as to prevent greater displacement in the deformation process.

With the described configuration, the part deforms, being compressed over 95% in the event of impact.

The deformable part of the invention allows making better use of the space reserved for the deformation of the metal part. This is due to the fact that said part has greater compressibility than foam and absorbs a greater amount of energy, especially at the beginning of the impact, which involves using a smaller deformation space. Controlling the deceleration of impacts is especially advantageous because it obtains greater control over the force/deformation curve.

The portions of the profile corresponding to the second straight sections will be those portions intended to be fixed to the stiff element of the structure of the vehicle, for which purpose they can be provided with holes and/or notches formed from their free longitudinal edge.

### Brief Description of the Drawings

The features and advantages of the part of the invention will be better understood with the following description made in reference to the attached drawings in which a non-limiting embodiment has been shown.

In the drawings:
Figure 1 is a perspective view of a deformable part formed according to the invention.
Figure 2 shows a longitudinal vertical section view of the front of a vehicle, showing the possible location of the part of Figure 1.
Figure 3 shows a schematic section view of an example of deformation due to a frontal impact of the vehicle due, for example, to hitting a pedestrian.
Figure 4 is a force/displacement graph comparing deformation of the foam with the deformation of the part of the invention.
Figure 5 shows a perspective view of an example of the connection of the part of the invention to the cross member of the bumper of a vehicle.
Figure 6 is a view similar to that of Figure 5, showing a possible variation of the connection of the deformable part to the cross member of the vehicle.

### Detailed Description of an Embodiment

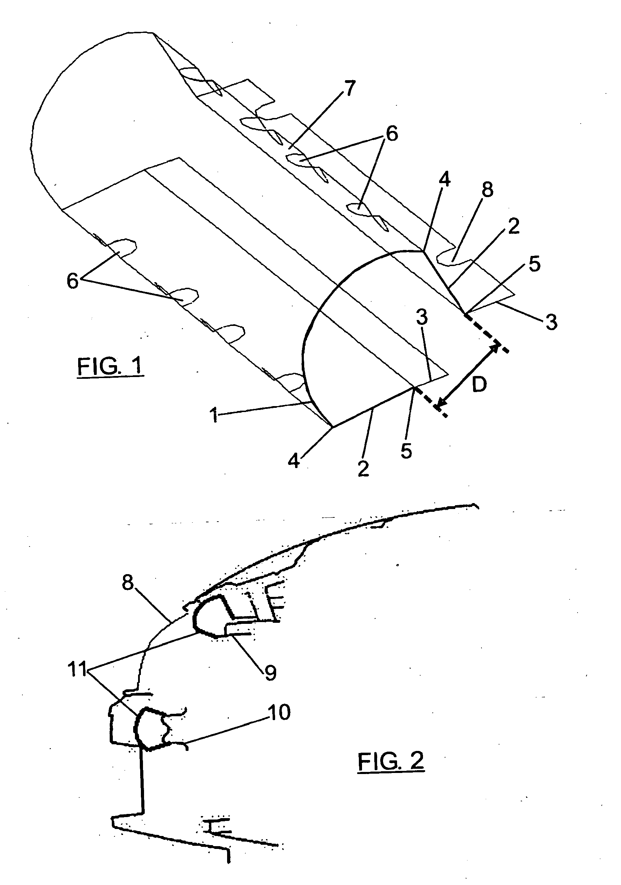

The deformable part of the invention, shown in Figure 1 consists of a metal profile, which can be obtained from sheet metal having a rectangular contour in which a series of shapings are made which allow obtaining a profile, the section of which includes a curved central section, having reference number 1, which is limited along its longitudinal edges by first identical and symmetric converging straight sections 2, followed by second identical and diverging also straight sections 3.

Edges 4 are determined along the profile between the central section 1 and the first straight sections 2. A second edge or angle having reference number 5 is likewise determined along the profile between the first straight sections 2 and the second straight sections 3.

According to another feature of the invention, the edges 4 are crossed by openings 6 partially extending over the curved area, corresponding to section 1, and over the planar areas corresponding to the first straight sections 2. These openings 6 define a reduction of strength and define intermediate bridges 7 acting by way of a hinge for facilitating the deformation of the central section 1.

The end straight sections 3 can have holes or notches 8 for their assembly in the vehicle, as will be explained below.

In part 1, the length of the curved section 1 is equal to the sum of the straight sections 2 plus the distance D separating the edges 5.

The described part is intended, as shown in Figure 2, for being assembled between the body or component forming the outer surface 8 of the front of the vehicle and stiff inner parts thereof which can be located in it upper part and have reference number 9, or which can consist of the cross member 10 of the bumper. In Figure 2 the part of the invention has reference number 11 and it can be seen how it is arranged between the discussed elements, a small separation being necessary between the outer surface 8 of the vehicle and the stiff elements 9 or 10.

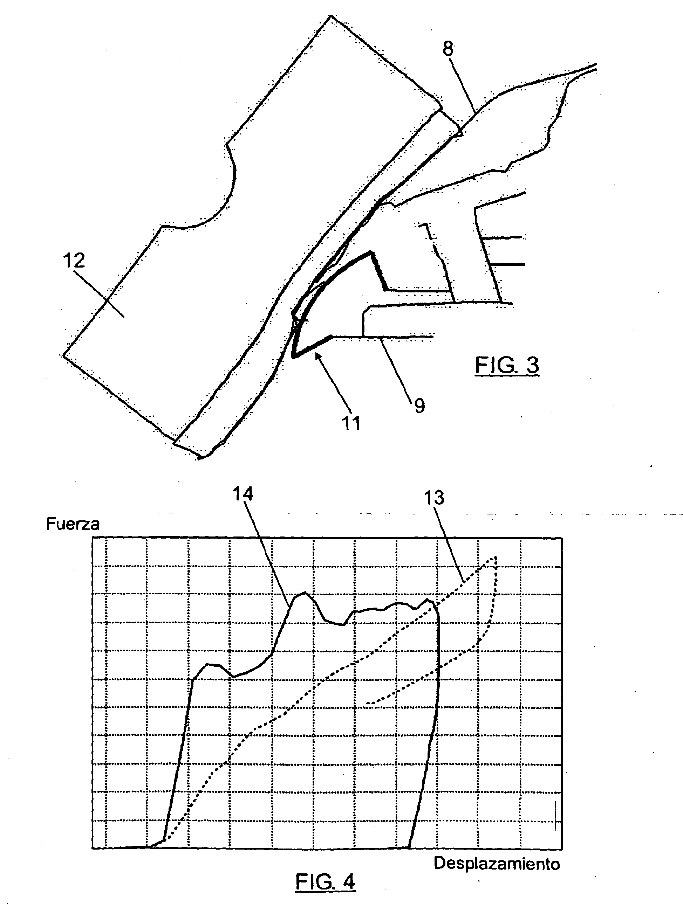

Figure 3 schematically shows an example of deformation of the part 11 connected to the upper stiff part 9 of the vehicle as a result of the impact caused against a body or pedestrian 12.
Figure 4 shows a force/displacement graph comparing the deformation of the foam with the deformation of the metal part of the invention. The dotted curve, having reference number 13, shows the performance of the foam system, whereas the continuous line, having reference number 14, shows the performance of the metal part of the invention. The y-axis indicates the level of force applied and the x-axis indicates the displacement of the part in the deformation area. It can be seen in this graph how at the beginning of the impact the metal part absorbs a larger amount of energy and has less displacement than the foam.

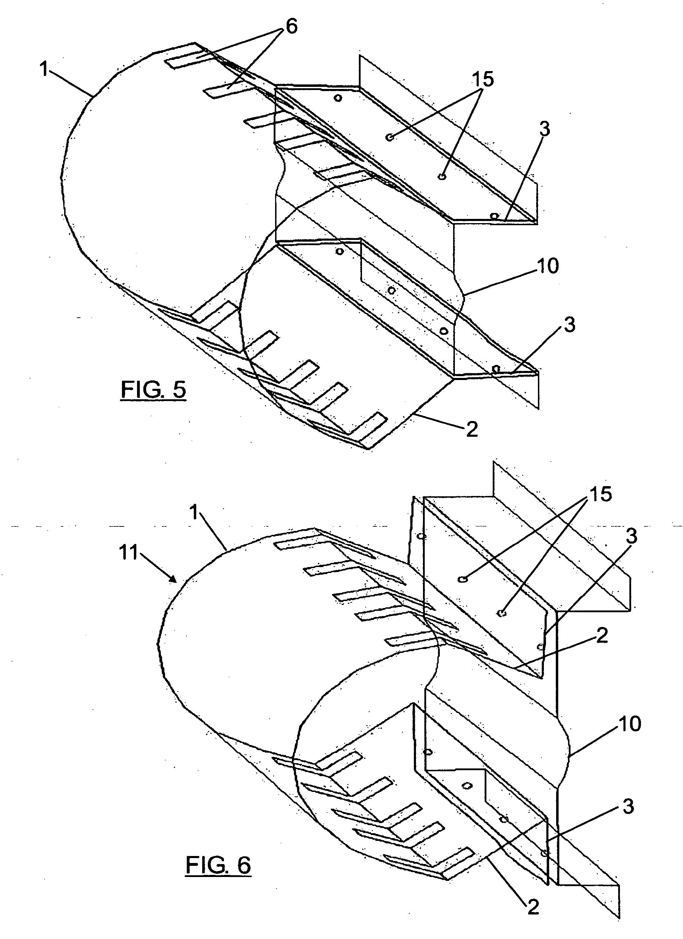

Figure 5 shows an example of the connection of the part 11 to the cross member 10 of the bumper. It can be seen how the end straight sections 3 of the part are in a position considerably parallel and have holes 15 for their fixing to the cross member 10 of the bumper, for example by means of screws.

In the case of Figure 6, the end straight sections 3 are bent outwardly and are located in a considerably coplanar position, also having holes 15 for their fixing to the cross member 10.

## Claims

1. A deformable part (11) for reducing the effect of frontal impacts in vehicles, that is formed by a sheet metal profile which, in a sectional view, has a central section (1) limited between first identical and symmetric straight sections (2), followed by second also respectively identical and symmetric straight sections (3), the first straight sections (2) being crossed by openings (6) extending in a transverse direction,
**characterized in that:**
1a) the central section (1) is curved;
1b) the first identical and symmetric straight sections (2) are converging;
1c) the second identical and symmetric straight sections (3) are diverging;
1d) edges (4) formed between the curved central section (1) and the first straight sections (2) are crossed by the openings (6) extending in the transverse direction;
1e) the openings (6) partially extend over both, the curved central section (1) and the first straight sections (2) in the transverse direction.

2. A deformable part (11) according to claim 1, **characterized in that** in a sectional view, the length of the curred central section (1) is equal to the sum of the length of the first straight sections (2) plus a distance (D) separating intersection points (5) formed between the first straight sections (2) and the second straight sections (3).

3. A deformable part (11) according to claim 1, **characterized in that** the portions of the profile corresponding to the second straight sections (3) have holes and/or notches (8) for their coupling and fixing to a stiff element of the structure of the vehicle.

## Patentansprüche

1. Verformbares Teil (11) zum Verringern der Wirkung von Frontalaufprallen bei Fahrzeugen, das durch ein Metallblechprofil gebildet wird, das, in einer Schnittansicht, eine mittige Sektion (1) hat, die zwischen ersten identischen und symmetrischen geraden Sektionen (2) begrenzt wird, gefolgt von zweiten, ebenfalls jeweils identischen und symmetrischen geraden Sektionen (3), wobei die ersten geraden Sektionen (2) durch Öffnungen (6) gekreuzt werden, die sich in einer Querrichtung erstrecken,
**dadurch gekennzeichnet, dass:**
1a) die mittige Sektion (1) gekrümmt ist,
1b) die ersten identischen und symmetrischen geraden Sektionen (2) zusammenlaufen,
1c) die zweiten identischen und symmetrischen geraden Sektionen (3) auseinanderlaufen,
1d) Kanten (4), die zwischen der gekrümmten mittigen Sektion (1) und den ersten geraden Sektionen (2) gebildet werden, durch die Öffnungen (6) gekreuzt werden, die sich in der Querrichtung erstrecken,
1e) sich die Öffnungen (6) teilweise in der Querrichtung sowohl über die gekrümmte mittige Sektion (1) als auch über die ersten geraden Sektionen (2) erstrecken.

2. Verformbares Teil (11) nach Anspruch 1, **dadurch gekennzeichnet, dass,** in einer Schnittansicht, die Länge der gekrümmten mittigen Sektion (1) gleich der Summe der Länge der ersten geraden Sektionen (2) zuzüglich einer Entfernung (D) ist, die Überschneidungspunkte (5) trennt, die zwischen den ersten geraden Sektionen (2) und den zweiten geraden Sektionen (3) gebildet werden.

3. Verformbares Teil (11) nach Anspruch 1, **dadurch gekennzeichnet, dass** die Abschnitte des Profils, die den zweiten geraden Sektionen (3) entsprechen, Löcher und/oder Kerben (8) für ihr Koppeln und Befestigen an einem steifen Element der Struktur des Fahrzeugs haben.

## Revendications

1. Une partie déformable (11) pour réduire l'effet des chocs frontaux sur les véhicules, qui est formée d'un profilé en feuille de métal qui, suivant une vue en coupe, a une partie centrale (1) limitée entre des premières parties droites identiques et symétriques (2), suivie de deuxièmes parties droites également respectivement identiques et symétriques (3), les premières parties droites (2) étant traversées par des ouvertures (6) qui s'étendent transversalement, **caractérisée en ce que :**
1a) la partie centrale (1) est incurvée ;
1b) les premières parties droites identiques et symétriques (2) sont convergentes ;
1c) les deuxièmes parties droites identiques et symétriques (3) sont divergentes ;
1d) les coins (4) formés entre la partie centrale incurvée (1) et les premières parties droites (2) sont traversés par les ouvertures (6) qui s'étendent transversalement ;
1e) les ouvertures (6) s'étendent partiellement sur la partie centrale incurvée (1) et les premières parties droites (2) transversalement.

2. Une partie déformable (11) selon la revendication 1, **caractérisée en ce que** suivant une vue de coupe, la longueur de la partie centrale incurvée (1) est égale à la somme de la longueur des premières parties droites (2) et de la distance (D) séparant les points d'intersection (5) formés entre les premières parties droites (2) et les deuxièmes parties droites (3).

3. Une partie déformable (11) selon la revendication 1, **caractérisée en ce que** les parties du profil correspondant aux deuxièmes parties droites (3) ont des trous et/ou des encoches (8) pour leur assemblage et leur fixation à un élément rigide de la structure du véhicule.
